Europäisches Patentamt

European Patent Office

Office européen des brevets

(11) Publication number: **0 069 413**

**B1**

(12) **EUROPEAN PATENT SPECIFICATION**

(45) Date of publication of patent specification: **09.10.85**

(51) Int. Cl.⁴: **H 01 R 43/00**

(21) Application number: **82200739.9**

(22) Date of filing: **14.06.82**

(54) Portable pneumatic wire cutter.

(30) Priority: **15.06.81 US 273631**

(43) Date of publication of application:
**12.01.83 Bulletin 83/02**

(45) Publication of the grant of the patent:
**09.10.85 Bulletin 85/41**

(84) Designated Contracting States:
**AT BE CH DE FR GB IT LI LU NL SE**

(56) References cited:
**US-A-4 046 045**
**US-A-4 051 749**
**US-A-4 130 040**
**US-A-4 228 709**
**US-A-4 257 295**

(73) Proprietor: **E.I. DU PONT DE NEMOURS AND COMPANY**
**1007 Market Street**
**Wilmington Delaware 19898 (US)**

(72) Inventor: **Eckelt, Peter**
**468 Pleasant View Road**
**New Cumberland Pennsylvania 17070 (US)**
Inventor: **Taylor, Jr., James Alexander**
**1 Chelton Circle**
**Camp Hill Pennsylvania 17011 (US)**

(74) Representative: **van der Beek, George Frans et al**
**Nederlandsch Octrooibureau Johan de Wittlaan 15 P.O. Box 29720**
**NL-2502 LS 's-Gravenhage (NL)**

Courier Press, Leamington Spa, England.

## Description

### Background

#### 1. Field of the invention

This invention relates to an article of manufacture for cutting insulated wire. More specifically, it refers to a portable high speed pneumatically actuated insulated wire cutter.

#### 2. The prior art

Prior art such as U.S. Patent 4,130,040 describes cutter assemblies for multiconductor flat flexible cable. The cutter described in that document is a bench press assembly performing the cutting operation in a series of separate steps rather than in any continuous process. Cutting machines for paper such as U.S. 2,388,332 and for fabric such as U.S. 3,735,657 cannot be employed for continuously and rapidly cutting specified lengths of wire cable. A need exists for a machine that will continuously cut multiconductor flat flexible cable.

### Summary of the invention

Our invention, as claimed, provides a multiple strand wire cutting assembly having multiple guiding elements so that optionally several different widths of multiple strand cable can be cut simultaneously at the same length. Our assembly consists of a housing supporting a pressure roller and a feed roller accommodating multiple strand wire from a feed reel. The wire is fed to a pair of guillotine type cutting blades. The upper blade is supported on a frame and is movable with respect to that frame by virtue of a cylinder rod actuated by an air cylinder. In the embodiment described a handle on one side of the cutting device provides the stroke which feeds the cable forward and then actuates the air cylinder causing the upper blade to descend and cut the multistrand wire at a predetermined length. Reversal of the handle moves the cylinder rod upward. This device provides a portable assembly for easily and quickly cutting specified lengths of multistrand insulated wire so that the wire can be used in various electrical connectors.

### Brief description of the drawings

Figure 1 is perspective of the cable cutting machine assembly.

Figure 2 is a partial view of the left side elevation showing the adjustment plate.

Figure 3 is an enlarged perspective of the right side of the assembled components.

Figure 4 is a top plan view of the assembled components.

Figure 5 shows an embodiment of this invention where multiple feed reels are mounted on the feed frame.

Figure 6 is a partial view of the left side elevation showing a variant actuating mechanism.

Figure 6a is a top plan view of the actuating mechanism of Figure 6.

### Detailed description of the invention

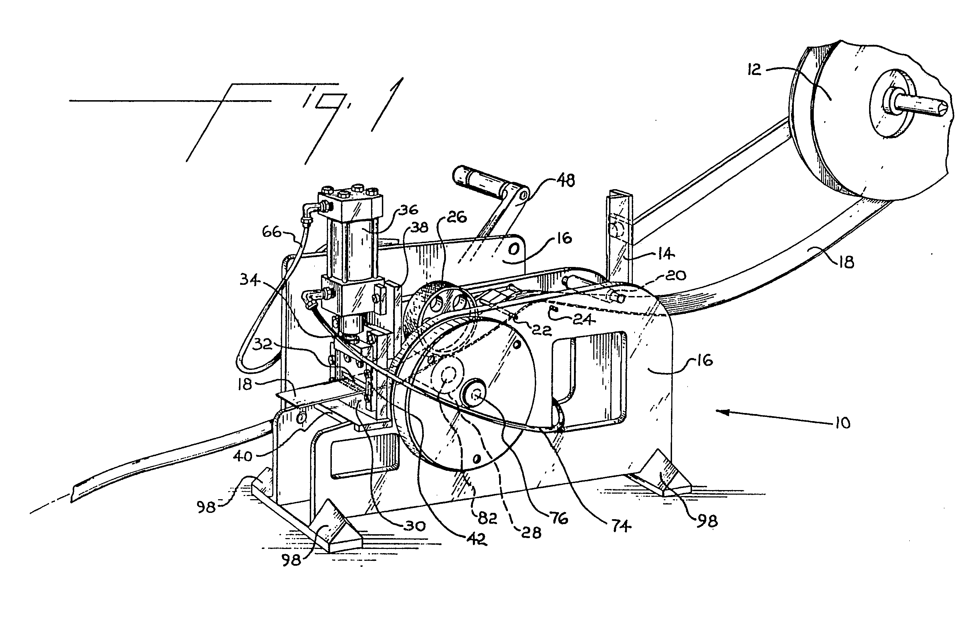

The pneumatic wire cutter assembly 10 shown in Figure 1 contains a feed reel 12 mounted on a reel support 14. Alternately the reel can be mounted separate from the assembly 10. The reel support in turn is mounted on frame 16. Multiple strand wire 18 is fed from the feed reel 12 under a guide roller 20. The wire 18 then feeds over and under respectively the two supporting bars 22 and 24 and between feed roller 26 and pressure roller 28 to the cutting blades, 30 and 32. The lower blade 30 is permanently mounted on the base plate 40 within support frame 42, and the upper movable blade 32 moves within support frame 42. The blades are preferably made of carbide steel. The wire is severed after a predetermined length of wire 18 has moved forward and stopped between the cutting blades 30 and 32. Thereafter, cylinder rod 34, activated by the air cylinder 36 supported on mounting block 38, moves down to force blade 32 into the wire so that a clean cut is made.

The air cylinder 36 and its mounting block 38 are supported through blade support frame 42 on a horizontal mounting plate 40. The support frame 42 is mounted perpendicularly to the horizontally positioned mounting plate 40.

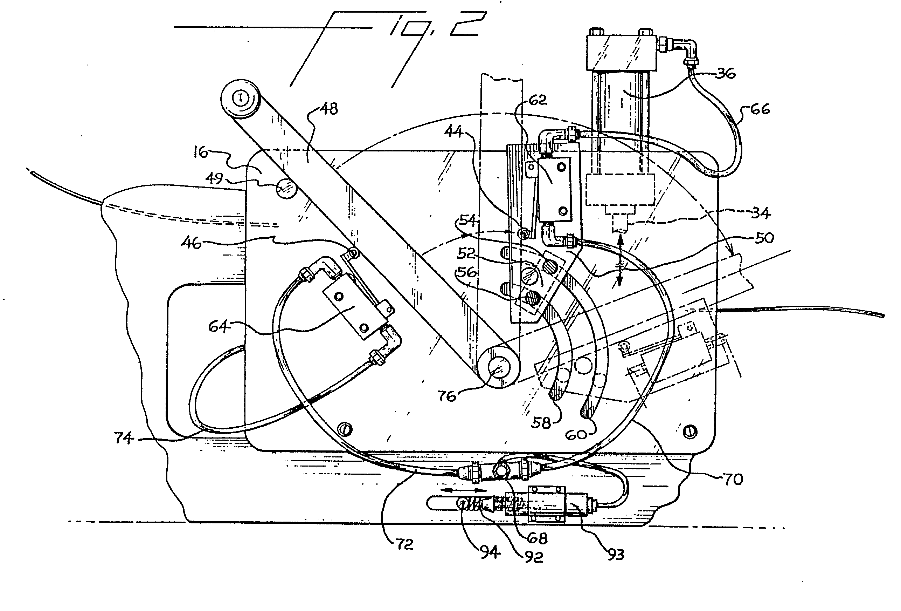

The left side of the assembly shown in Figure 2 contains the contact roller 44 and contact stop 46 which are actuated by movement of the handle 48.

The amount of cable fed through the assembly 10 is determined by the setting on the adjustment plate 50. The nut plate 52 contains two nuts 54 and 56 for mounting the adjustment plate 50 in a prescribed position in the adjusting grooves 58 and 60. The grooves are calibrated for various wire lengths. The further the adjustment plate 50 is moved downward the greater the distance the wire will travel before stopping and therefore, the longer will be the length of wire cut. An air switch 62 is mounted on the adjustment plate 50. The air hose 66 connects the air cylinder 36 to the air switch. The air source connector 68 provides the air to the air cylinder 36 by way of hose 70 and switch 62. Hose 72 leads to the contact stop air switch assembly 64 and hose 74 leads from that assembly to the air cylinder 36. Air pressure of 0.48—0.69 N/m² (70—100 psi) is adequate to perform the cutting function of this machine.

A break ball bearing 76 supports a gear 78 that is connected via the gear on the shaft 82 to the handle 48.

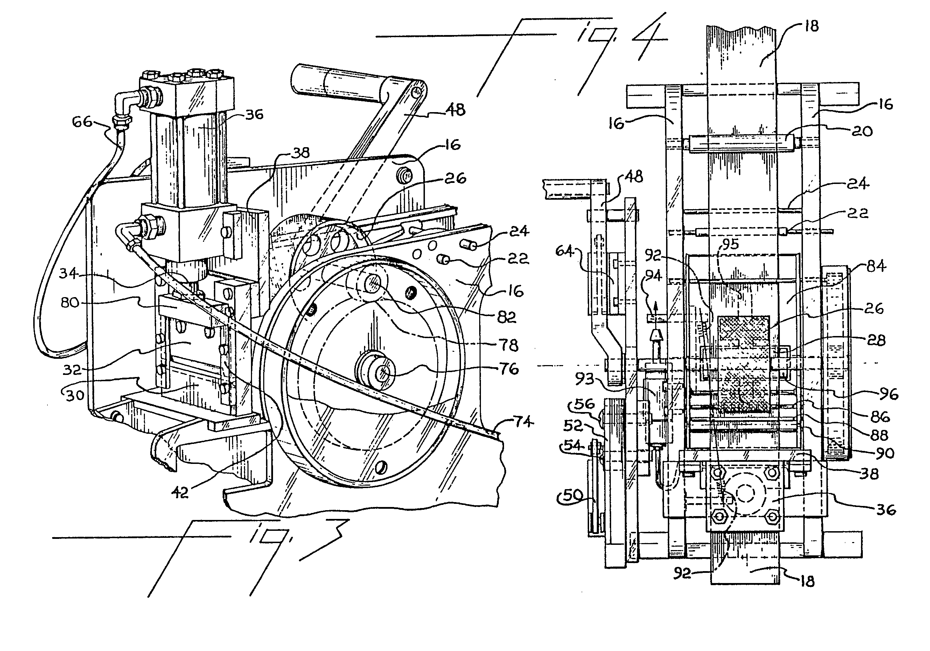

Figure 3 shows the cutting blades in more detail. Top blade 32 rides within a support frame 42. The shaft 34 is attached to the top blade 32 by way of the alignment block 80. Blade 32 moves up and down in response to actuation of the air cylinder 36. Knife blade 30 remains fixed in the bottom of support 42 which in turn is attached to the base plate 40.

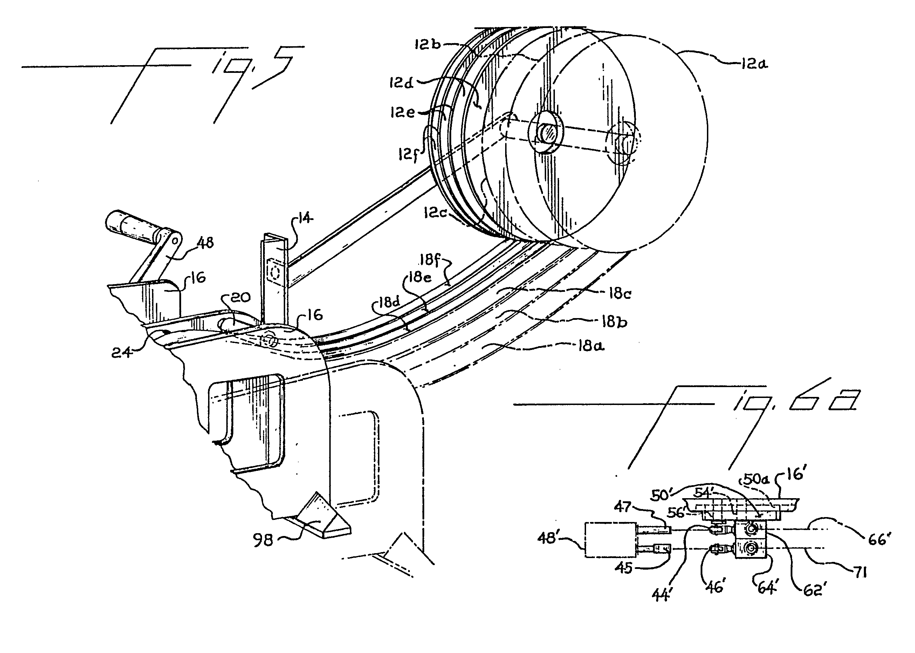

Figure 4 shows the release spring 92 which acts in response to movement in the direction of the arrows of the pressure release 94. Movement of pressure release 94 releases the pressure roller 28 so that the wire 18 can be moved freely within the assembly. Figure 4 also shows the guide rods 86, 88 and 90 over which the wire 18 feeds into the area between the knife blades 30 and 32. A collar 96 is located below the locking bearing 76. A tray 84 is positioned below the wire 18 as it moves into the assembly. A plate 95 over the wire is also shown.

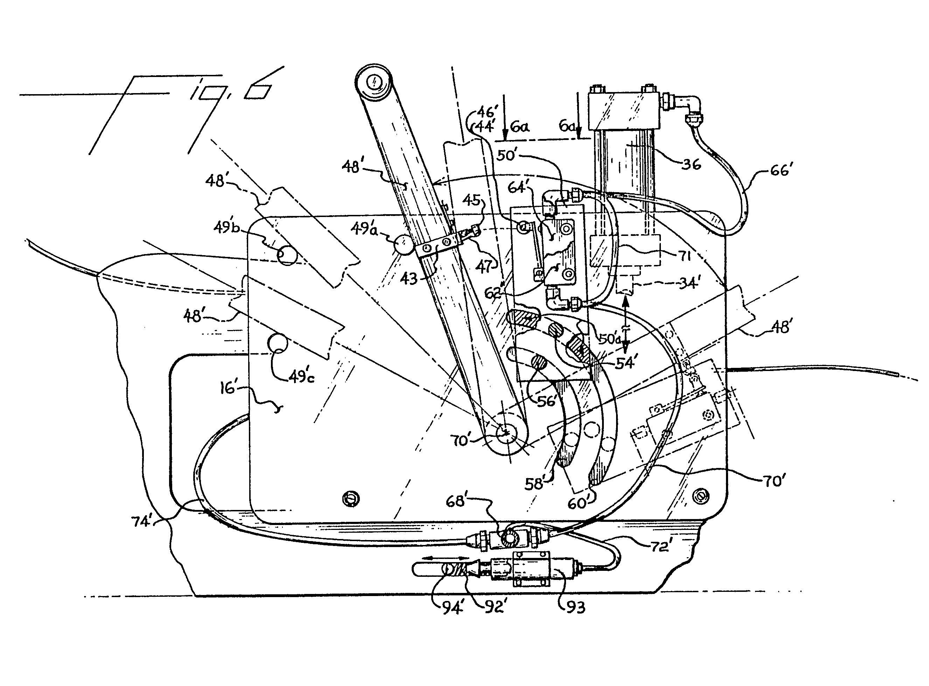

Figure 5 shows an alternative embodiment of the invention in which more than one feed reel 12; namely 12a, b, c, d, e and f are mounted on the reel support 14. The cumulative width of these wires cannot exceed the width between the two sides of the frame 16 and the width of the cutting blades 30 and 32. Under normal circumstances no more than wires 18a-f will be cut simultaneously. The cutting blades will simultaneously cut all adjacent wires presented.

An alternative means of actuating the cutting blade 32 is shown in Figures 6 and 6a. This actuating means consists of a leaf spring 47 and an up stroke activator screw 45 mounted on the handle 48' by means of mounting plate 43. Movement of the handle 48' in a clockwise direction from the stop 49'a, 49'b or 49'c to the contact roller 44' and contact stop 46' causes both actuation of the downward and upward stroke of the blade 32. Similar to the air switch mechanism shown in Figure 2, the air switch 62' is mounted on the adjustment plate 50'. The air hose 66' connects the air cylinder 36' to the air switch 62'. In contrast to the air stop switch of Figure 2, the air stop switch 64' is mounted adjacent to the air switch 62'. The air hose 71 feeds air to switch 64'.

Pressure of the leaf spring 47 on the contact roller 44' forces air into the cylinder 36' which moves the blade 32 downward in the first cycle. The pressure of the screw 45 on the roller 46' brings air out of the cylinder 36' and moves the blade 32 upwards in the second cycle. At the same time air moves from the reservoir 68' through hose 72' to the air cylinder 93 which forces a plunger into the pressure release roller 94'. Movement of pressure release roller 94' releases the pressure roller 28 so that the wire 18 can be moved freely within the assembly.

As with the actuating assembly of Figure 2, the length of wire fed through the assembly 10 is determined by the setting on the adjustment plates 50' and 50'a. The nuts 54' and 56' hold the plates 50' and 50'a in a prescribed position in the adjusting grooves 60' and 58' respectively.

The pneumatic wire cutter assembly 10 normally rests on frame supports 98. The entire unit is sufficiently light to be able to be carried by the normal operator.

Although the Figures 1 through 6 show a handle 48 and a manual rotation of that handle it is also possible to attach an electrical apparatus so that actuation of the air switches can be carried out electrically.

## Claims

1. A two cycle cutter assembly (10) for feeding forward a predetermined length of multiconductor flexible cable, (18), and then severing that length from the cable, said assembly comprising

a frame member (16) having two upright side members capable of supporting at least one feed reel (12) containing multiconductor flexible cable (18),

multiple cable guide or support members (22, 24) and a horizontal mounting plate (40) connecting said side members,

a cable feed roller (26) supported between said upright side members on a shaft piercing both said side members,

an air cylinder (36) mounted on said frame above said horizontal mounting plate,

a blade support (42) mounted on said frame between said air cylinder and said horizontal mounting plate,

the arrangement being such that said cable is drawn from said reel and between said upright side members and between said knife blades in response to actuation of said feed roller by a drive element (48), and said cable is then severed after reaching the point of maximum movement,

a bottom knife blade (30) fixedly mounted within said blade support (42) and an upper knife blade (32) movable within said blade support in response to actuation by said air cylinder, and an adjustment plate (50) is attached to one of said upright side members to control the maximum movement of said cable during the first cycle of said assembly, said adjustment plate being adjustable along said side member along multiple adjustment grooves, the position of said adjustment plate along said grooves determining the maximum movement of said cable, by determining the length of stroke of the drive element.

2. A cutter assembly according to claim 1 wherein said feed roller is actuated by moving a handle (48) mounted on a shaft, geared to said feed roller.

3. A cutter assembly according to claim 1 wherein multiple cable feed reels are mounted on said frame member and multiple cables are severed simultaneously.

4. A cutter assembly according to claim 2 wherein the upper knife blade moves downward in response to said movement of the handle, said movement causing contact with an air switch.

5. A cutter assembly according to claim 2 wherein the upper knife blade moves downward in response to said movement of the handle and upwards in response to a counter movement of said handle, each movement causing contact with a separate air switch.

6. A cutter assembly according to claims 1 or 2 wherein the upper knife blade moves downward and then upwards in response to a movement of the handle said movement causing contact with two adjacent air switches.

## Patentansprüche

1. Zweitakt-Schneidanordnung (10) zum vor-

*schieben einer vorbestimmten Länge eines* mehradrigen flexiblen Kabels (18) und zum anschließenden Abschneiden dieser Länge vom Kabel, wobei die Anordnung aufweist:

ein Rahmenelement (16), das zwei aufrechte Seitenelemente hat, die wenigstens eine Abwickelspule (12) tragen können, die das mehradrige flexible Kable (18) enthält,

mehrere Kabeleführungs- oder Stützelemente (22, 24) und eine horizontale Befestigungsplatte (40), die die Seitenelemente verbindet,

eine Kabelvorschubrolle (26), die zwischen den aufrechten Seitenelementen auf einer Welle gelagert ist, die beide Seitenelemente durchsetzt,

einen Luftzylinder (36), der am Rahmen oberhalb der horizontalen Befestigungsplatte angebracht ist,

einen Messerhalter (42), der am Rahmen zwischen dem Luftzylinder und der horizontalen Befestigungsplatte angebracht ist,

wobei die Auslegung derart getroffen ist, daß das Kabel von den Spule in Abhängigkeit von der Betätigung der Vorschubrolle durch ein Antriebselement (48) abgezogen und zwischen den aufrechten Seitenelementen und zwischen den Schneidmessern eingezogen wird und das Kabel dann durchgetrennt wird, nachdem es den Punkt seiner maximalen Bewegung erreicht hat,

ein unteres Schneidmesser (30), das fest in dem Messerhalter (42) angebracht ist und ein oberes Schneidmesser (32), das im Messerhalter in Abhängigkeit von der Betätigung durch den Luftzylinder beweglich ist, und eine Einstellplatte (50), die an einem der aufrechten Seitenelemente angebracht ist, um die maximale Bewegung des Kabels während des ersten Arbeitstakts der Anordnung zu steuern, wobei die Einstellplatte längs des Seitenelements über mehrere Einstellnuten einstellbar ist und wobei die Lage der Einstellplatte längs der Nuten die maximale Bewegung des Kabels durch die Bestimmung der Länge des Hubs des Antriebselements bestimmt ist.

2. Schneidanordnung nach Anspruch 1, dadurch gekennzeichnet, daß die Vorschubrolle dadurch betätigt wird, daß ein Griffteil (48) bewegt wird, das an einer Welle angebracht ist, die in Zahneingriff mit der Vorschubrolle ist.

3. Schneidanordnung nach Anspruch 1, dadurch gekennzeichnet, daß mehrere Kabelabwickelspulen am Rahmenelement angebracht sind und daß mehrere Kabel gleichzeitig durchgeschnitten werden.

4. Schneidanordnung nach Anspruch 2, dadurch gekennzeichnet, daß das obere Schneidmesser sich nach unten in Abhängigkeit von der Bewegung des Griffteils bewegt und daß bei dieser Bewegung ein Kontakt mit einem Luftschalter bewirkt wird.

5. Schneidanordnung nach Anspruch 2, dadurch gekennzeichnet, daß sich das obere Schneidmesser in Abhängigkeit von der Bewegung des Griffteils nach unten und in Abhängigkeit von einer Gegenbewegung des Griffteils nach oben bewegt, und daß jede Bewegung einen Kontakt mit einem gesonderten Luftschalter bewirkt.

6. Schneidanordnung nach Anspruch 1 oder 2, dadurch gekennzeichnet, daß sich das obere Schneidmesser in Abhängigkeit von einer Bewegung des Griffteils nach unten und dann nach oben bewegt, und daß die Bewegung einen Kontakt mit zwei benachbarten Luftschaltern bewirkt.

**Revendications**

1. Dispositif coupe fils (10) à deux cycles pour la fourniture d'une longueur prédéterminée de câble flexible multiconducteur, (18) et la séparation de cette longueur du câble, dispositif caractérisé en ce qu'il comprend:

un bâti (16) présentant deux flasques verticaux susceptible de supporter au moins un touret d'alimentation (12) contenant le câble flexible multiconducteur (18),

des organes de support ou de guidage (22, 24) du câble et une plaque de montage horizontale (40) reliant les deux flasques,

un galet d'alimentation de câble (26) supporté entre les deux flasques verticaux par un arbre traversant lesdits deux flasques,

un vérin pneumatic (36) monté sur le bâti au-dessus de la plaque de montage horizontale,

un support de lames (42) monté sur le bâti entre le vérin pneumatique et la plaque de montage horizontale, la disposition étant telle que le câble est tiré du touret entre les flasques verticaux et les lames de couteau en réponse à l'actionnement du galet d'alimentation, par un organe d'entraînement (48), et que le câble est alors séparé après avoir atteint le point du mouvement maximum,

une lame de couteau inférieure (30) montée fixement dans le support de lame (42) et une lame de couteau supérieure (32) mobile dans le support de lame en réponse à l'actionnement du vérin pneumatique, et une plaque de réglage (50) est fixée à l'un des flasques verticaux pour régler le mouvement du câble pendant le premier cycle de ce dispositif, la plaque de réglage étant réglée le long des flasques, le long de rainures de réglage (60', 58') déterminant le mouvement maximum du câble en déterminant la longueur de la course de l'organe d'entraînement (48).

2. Dispositif coupe fils selon la revendication 1, caractérisé en ce que le galet d'alimentation est actionné par le déplacement d'une manivelle (48) montée sur un arbre, engrainé au galet d'alimentation.

3. Dispositif coupe fils selon la revendication 1, caractérisé en ce que plusieurs tourets d'alimentation de câble sont montés sur le bâti et que plusieurs câbles sont séparés simultanément.

4. Dispositif couple fils selon la revendication 2, caractérisé en ce que la lame de couteau supérieure descend en réponse au mouvement de la mainivelle, le mouvement produisant le contact avec un interrupteur pneumatique (62).

5. Dispositif coupe fils selon la revendication 2, caractérisé en ce que la lame de couteau supérieure descend en réponse au mouvement de la manivelle et remonte en réponse à un mouvement inverse de la manivelle, chaque mouvement produisant le contact avec un interrupteur pneumatique séparé (62, 64).

6. Dispositif coupe fils selon la revendication 1 ou 2, caractérisé en ce que la lame de couteau supérieure descend et remonte en réponse à un mouvement de la manivelle, le mouvement produisant le contact avec deux interrupteurs pneumatiques adjacents (62', 64').

Fig. 2

0 069 413

Fig. 4

Fig. 3

0 069 413

Fig. 5

Fig. 6a

0 069 413

Fig. 6